# EUROPÄISCHE PATENTSCHRIFT

(11) **EP 0 882 639 B1**
(45) Veröffentlichungstag und Bekanntmachung des Hinweises auf die Patenterteilung: **21.01.2004**
(21) Anmeldenummer: 98107615.1
(22) Anmeldetag: 27.04.1998
(51) Int. Cl.: B62D 25/00, B62D 25/06, B62D 25/02, B62D 25/10

(54) **Karosserierahmenbauteil für die Karosserie eines Kraftfahrzeuges und Verfahren für dessen Herstellung**
Component for bodywork construction of motor vehicles and its method of manufacuture
Elément pour la fabrication de carrosserie de véhicules automobiles et méthode de sa manufacture

(30) Priorität: 02.06.1997 DE 19723034
(43) Veröffentlichungstag der Anmeldung: 09.12.1998
(73) Patentinhaber: Volkswagen Aktiengesellschaft, 38436 Wolfsburg (DE)
(72) Erfinder: Oehlerking, Conrad, Dipl.-Ing., 38527 Meine (DE); Welsch, Frank, Dr., 38179 Schwülper (DE)

(56) Entgegenhaltungen:
- GB-A- 286 664
- GB-A- 422 642
- JP-A- 6 007 874
- US-A- 5 370 438

## Beschreibung

Die Erfindung betrifft eine Dachträgerstütze für die Karosserie eines Kraftfahrzeuges, wobei die Dachträgerstütze eine spezifische Form aufweist und zur Aufnahme mindestens einer auf dieselbe wirkenden Kraft ausgebildet ist, wobei aufgrund der spezifischen Form der Dachträgerstütze bei Aufnahme dieser Kraft innerhalb verschiedener Bereiche derselben unterschiedliche Belastungs- bzw. Spannungszustände existieren, insbesondere in einem ersten Bereich hohe und in einem zweiten Bereich geringere Belastungs- bzw. Spannungszustände auftreten.

Weiterhin betrifft die Erfindung ein Verfahren zum Herstellen einer Dachträgerstütze für die Karosserie eines Kraftfahrzeuges, wobei die Dachträgerstütze aus einem im wesentlichen flächigem Material durch Umformen zu einer innerhalb einer Karosserie einbaubaren spezifischen Form gebildet wird und die Dachträgerstütze - im in der Karosserie eingebauten Zustand - mindestens eine auf dieselbe wirkende Kraft aufnimmt, wobei bei Aufnahme dieser Kraft aufgrund der spezifischen Form der Dachträgerstütze innerhalb verschiedener Bereiche der Dachträgerstütze unterschiedliche Belastungs- bzw. Spannungszustände erzeugt werden.

Im Stand der Technik, von dem die Erfindung ausgeht, sind Dachträgerstützen oder andere Karosseriebauteile bekannt, die auf unterschiedliche Arten hergestellt werden können, damit das Gesamtgewicht des Kraftfahrzeuges möglichst gering ist. Damit diese Karosserierahmenbauteile die auf sie wirkenden Kräfte aufnehmen können weisen die Karosseriebauteile einerseits eine ihrem Zweck entsprechende spezifische Form und eine entsprechende Materialdicke auf. Die Materialdicke ist in unterschiedlichen Bereichen des Karosseriebauteils in Abhängigkeit der hier auftretenden Belastungs- bzw. Spannungszustände unterschiedlich ausgebildet. So ist in Bereichen mit hohen Spannungszustände unterschiedlich ausgebildet. So ist in Bereichen mit hohen Belastungs- bzw. Spannungszuständen auch eine weitaus größere "Materialdicke" vorgesehen als in Bereichen mit geringeren Belastungs- bzw. Spannungszuständen.

So werden gewichtssparende Karosserierahmenbauteile bislang mit Hilfe der "tailoredblank"-Technik hergestellt. Hierbei werden verschiedene Metallelemente, meistens Metallbleche mit unterschiedlichen Gefügestrukturen, die zudem unterschiedliche Blechdicken aufweisen, derartig miteinander verschweißt, daß ein Karosserierahmenbauteil mit einer spezifischen Form entsteht. Hierbei weist das Karosserierahmenbauteil in unterschiedlichen Bereichen - aufgrund der verwendeten Metallbleche mit unterschiedlicher Blechdicke - eine unterschiedliche Wandstärke bzw. "Materialdicke" auf. Weiterhin werden derartige Karosserierahmenbauteile mit in verschiedenen Bereichen vorgesehenen unterschiedlichen Wandstärken auch im aufwendigen Druckgußverfahren hergestellt.

Femer sind im Stand der Technik separat anzuordnende Strukturelemente bekannt (DE-OS 25 58 332 und EP 0 633 182 B1), die als Lochbleche oder Stahigitter ausgeführt sind und insbesondere an den Innenseiten von Fahrzeugtüren oder Fahrzeughauben befestigt werden, um die mechanische Festigkeit bzw. Steifigkeit einer Fahrzeugtüre zu erhöhen. Diese Strukturelemente werden auf die entsprechenden Bereiche einer Fahrzeugtüre aufgeklebt oder mit dem Blech der Fahrzeugtüre durch Kaltverformung verbunden.

Die bekannten Karosserierahmenbauteile, die mit Hilfe des "tailored-blank"-Verfahrens oder Druckgußverfahrens hergestellt werden, sind einerseits nicht optimal ausgebildet, andererseits sind die Verfahren für deren Herstellung sehr aufwendig. So hat die Praxis gezeigt, daß die mit Hilfe des "tailored-blank"-Verfahrens herzustellenden komplexen Karosserierahmenbauteile, da für deren Herstellung verschiedene Metallbleche mit unterschiedlichen Gefügestrukturen verwendet werden, nur unter hohem Aufwand gefertigt werden können und die entsprechenden Fertigungstoleranzen für das Karosserierahmenbauteil bei dessen Zusammensetzung nur schwer einzuhalten sind.

Weiterhin müssen die vorhandenen Schweißnähte nicht nur präzise ausgeführt sein, sondern müssen auch die entsprechenden Kräfte aufnehmen, wobei sie innerhalb des Karosserierahmenbauteils als Schwachstellen existent sind. Im Ergebnis ist das gesamte Verfahren für diese Art der Herstellung äußerst zeitaufwendig.

Des Weiteren ist aus der US-A-5,370,438 die den Oberbegriff der unabhängigen Ausprüche zeigt, ein sich in Fahrzeuglängsrichtung erstreckendes Verstärkungsteil bekannt, welches zur definierten Beeinflussung des Crashverhaltens mit einer Mehrzahl nacheinander angeordneter Löcher versehen ist, wobei der Durchmesser der einzelnen Löcher von vom nach hinten kontinuierlich größer gewählt ist.

Schließlich ist aus der GB-A-286,664 ein Wagendach zu entnehmen, welches zur Erhöhung seiner Festigkeit mit eingepreßten Verstärkungsrippen versehen ist, wobei die Bereiche zwischen den Verstärkungsrippen gelocht ausgebildet sind, um das Gewicht des Dachbleches zu verringern. Als zweckmäßig wird weiterhin herausgestellt, die besagten Bereiche vollständig mit Löchern zu versehen.

Der Erfindung liegt daher die Aufgabe zugrunde, ein Karosserierahmenbauteil mit möglichst wenig Gewicht und ein Verfahren für dessen Herstellung anzugeben, bei dem keine großen Fertigungstoleranzen und möglichst wenig Schwachstellen auftreten, wobei das Verfahren für dessen Herstellung ohne großen Zeitaufwand durchführbar ist.

Erfindungsgemäß wird die Aufgabe in Verbindung mit den Merkmalen im Oberbegriff des Anspruchs 1 dadurch gelöst, daß durch bestimmte Lochabstände zwischen den Durchgangslöchern ein gleitender Übergang von einem Bereich eines höheren Belastungs- bzw. Spannungszustandes zu einem Bereich eines geringeren Belastungs- bzw. Spannungszustandes ausgebildet ist.

Für das Verfahren zur Herstellung des Karosserierahmenbauteils wird die Aufgabe nun dadurch gelöst, daß vor dem Umformen oder während des Umformens des flächigen Materials zu der spezifischen Form des Karosserierahmenbauteiles in dem Bereich des flächigen Materials; in dem nach dem Umformen - in eingebautem Zustand des Karosserierahmenbauteiles - ein geringerer Belastungs- bzw. Spannungszustand auftritt,

Durchgangslöcher zur Reduzierung des Materials des Karosserierahmenbauteiles ausgebildet werden, wobei durch die Wahl bestimmter Lochabstände zwischen den Durchgangslöchern ein gleitender Übergang von einem Bereich eines höheren Belastungs- bzw. Spannungszustandes zu einem Bereich eines geringeren Belastungs- bzw. Spannungszustandes ausgebildet wird.

Dadurch, daß nunmehr zur Reduzierung des Materials des Karosserierahmenbauteiles, also zur Gewichtseinsparung Durchgangslöcher, die eine bestimmte Beabstandung zueinander aufweisen, in einem Bereich niedriger Belastungen bzw. Spannungen ausgebildet werden, werden die oben beschriebenen Nachteile vermieden. Einerseits kann nun auf einfache Weise das für das Karosserierahmenbauteil verwendete Material in geeigneten Bereichen reduziert werden, so daß die bislang mit Hilfe des "tailoredblank"-Verfahrens komplexere Zusammensetzung (durch Blechstücke verschiedener Dicke) des Karosserierahmenbauteiles entfällt. Da keine komplexe Zusammensetzung mehr notwendig ist, können nicht nur bessere Toleranzwerte erreicht werden, sondern es entfallen auch die bisher notwendigen - die Schwachstellen bildenden - Schweißnähte. Da bei dem Verfahren zur Herstellung nunmehr mehrere Durchgangslöcher vor dem Umformen oder während des Umformens hergestellt werden können, kann das Verfahren zur Herstellung eines Karosserierahmenbauteiles auch in relativ kurzer Zeit durchgeführt werden.

Es gibt nun eine Vielzahl von Möglichkeiten, das erfindungsgemäße Karosserierahmenbauteil bzw. das Verfahren zu dessen Herstellung in vorteilhafter Weise auszugestalten und weiterzubilden. Hierfür darf an dieser Stelle auf die dem Patentanspruch 1 und dem Patentanspruch 14 nachgeordneten Patentansprüche verwiesen werden.

Im übrigen wird nun eine Ausführungsform der Erfindung anhand einer Zeichnung näher erläutert. In der Zeichnung zeigt
- Fig. 1: ein Karosserierahmenbauteil mit einer spezifischen Form gemäß der Erfindung in einer schematischen Darstellung und
- Fig. 2: ein flächiges Material kurz vor dem Umformen zur Herstellung eines Karosserierahmenbauteiles gemäß der Erfindung.

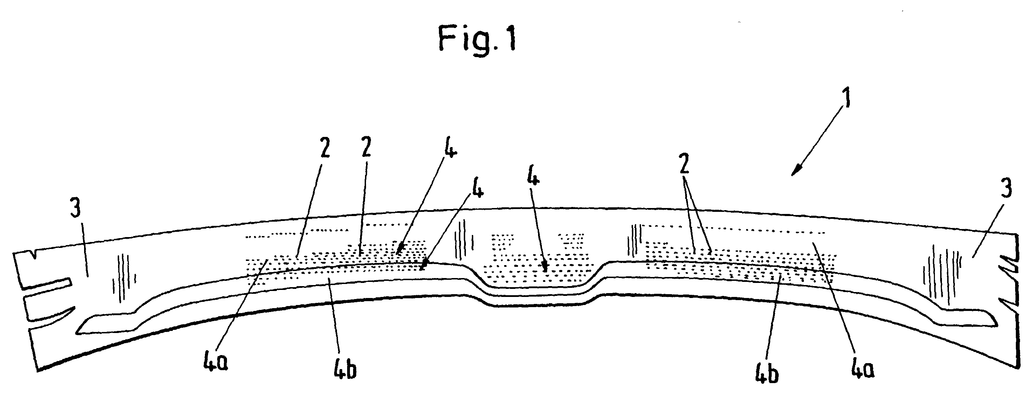

Die Fig. 1 zeigt ein Kärosserierahmenbauteil 1, nämlich ein als Dachträgerstütze ausgebildetes Karosseriebauteil 1 für die Karosserie eines Kraftfahrzeuges. Das Karosserierahmenbauteil 1 weist eine für eine Dachträgerstütze typische, spezifische Form auf und ist zur Aufnahme der auf eine Dachträgerstütze wirkenden Kräfte ausgebildet, bildet also im eingebauten Zustand ein tragendes Teil der Karosserie. Aufgrund der spezifischen Form des Karosserierahmenbauteiles 1 existieren bei Aufnahme dieser Kräfte, also dann wenn das als Dachträgerstütze ausgebildete Karosserierahmenbauteil 1 im Dachbereich eines Kraftfahrzeuges eingebaut ist, innerhalb verschiedener Bereiche 3 bzw. 4 (4a, 4b) des Karosserierahmenbauteiles 1 unterschiedliche Belastungs- bzw. Spannungszustände. So treten in einem ersten Bereich 3, nämlich insbesondere im Randbereich, hohe und in einem zweiten Bereich 4 (4a,4b), nämlich insbesondere im mittleren Bereich der Dachträgerstütze, geringere Belastungs- bzw. Spannungszustände auf. Die auftretenden Belastungs- bzw. Spannungszustände können in den verschiedenen Bereichen sehr unterschiedlich ausgeprägt sein. Dies ist einerseits abhängig von der spezifischen Form des Karosserierahmenbauteils 1, andererseits von den in den verschiedenen Bereichen auftretenden Kräften oder Kraftkomponenten, beispielsweise, Querkräften Normalkräften oder auch Biegekräften bzw. -momenten.

Eine Gewichtseinsparung am Karosserierahmenbauteil 1 ist dadurch realisiert, daß in dem Bereich 4 (4a, 4b) des geringeren Belastungs- bzw. Spannungszustandes zur Reduzierung des Materials des Karosserierahmenbauteiles 1 mehrere Durchgangslöcher 2 ausgebildet sind.

Durch die Durchgangslöcher 2 ist ein bestimmtes Lochmuster gebildet, so daß das Gewicht des Karosserierahmenbauteiles 1 gemäß der auf das Karosserierahmenbauteil 1 wirkenden Belastungen optimiert ist.

Durch die Wahl bestimmter Lochabstände zwischen den Durchgangslöchem 2 kann nunmehr erfindungsgemäß ein gleitender Übergang von einem Bereich eines höheren Belastungs- bzw. Spannungszustandes zu einem Bereich eines geringeren Belastungs- bzw. Spannungszustandes ausgebildet werden.

Von großem Vorteil ist, daß das Karosserierahmenbauteil 1 durch die Ausbildung der Durchgangslöcher 2 zur Reduzierung des Materials überall eine im wesentlichen gleiche Materialdicke aufweisen kann. Im Ergebnis kann das Karosserierahmenbauteil 1 dadurch auf einfache Weise durch einen oder mehrere Umformvorgänge aus einem flächigen Material, insbesondere aus Metallplatinen hergestellt werden.

Damit das Karosserierahmenbauteil 1. hinsichtlich seines Gewichtszustandes gemäß der im Karosseriebauteil 1 existierenden Belastungen optimal ausgelegt werden kann, können verschiedene Parameter variiert werden. So können die Durchgangslöcher 2 eine bestimmte Form aufweisen, beispielsweise können die Durchgangslöcher 2 kreisförmig, dreiecksförmig oder viereckig ausgebildet sein. Weiterhin können die Durchgangslöcher 2 - in Abhängigkeit der auftretenden Belastungen - unterschiedliche bestimmte Lochdurchmesser aufweisen. Im Ergebnis kann die Form und der Lochdurchmesser der Durchgangslöcher 2 an die in dem Karosserierahmenbauteil 1 auftretenden Belastungen angepaßt werden. Desweiteren wird durch den Lochabstand der Durchgangslöcher 2 untereinander und ein bestimmtes Lochmuster das Karosserierahmenbauteil 1 entsprechend der auftretenden Belastungen optimiert. Beispielsweise können die Durchgangslöcher 2 in bestimmten Reihen - wie in Fig. 1 gezeigt - angeordnet werden.

Grundsätzlich werden die Durchgangslöcher 2 in einem bestimmten Abstand zu einem Krafteinleitungspunkt des Karosserierahmenbauteiles 1, insbesondere in einem bestimmten Abstand zu Scharnieren, Federbeinen, Funktionsflächen oder Knoten vorgesehen, da diese direkt an einen Krafteinleitungspunkt angrenzenden Bereiche (hier die Bereiche 3) des Karosserierahmenbauteiles 1 stärker beansprucht werden. Als Funktionsflächen können insbesondere Anlageflächen zur Verbindung mit anderen Bauteilen sowie Referenzflächen z.B. zur Positionierung des Bauteils bei der Fertigung dienen.

So sind bei dem in der Fig. 1 dargestellten, als Dachträgerstütze ausgebildeten Karosserierahmenbauteil 1 die Durchgangslöcher 2 im mittleren Bereich 4 (4a, 4b) der Dachträgerstütze ausgebildet und weniger in den äußeren (linken und rechten) Bereichen 3 (Randbereichen) nahe den Befestigungspunkten. Femer ist aus Fig. 1 erkennbar, daß die als Punkte dargestellten Durchgangslöcher 2 zur Mitte des Karosserierahmenbauteiles 1 hin ein ansteigendes stufenförmiges Lochmuster bilden, wobei die Durchgangslöcher 2 in bestimmten Reihen angeordnet sind.

Das in der Fig. 1 dargestellte Karosserierahmenbauteil 1 wird aus Metall, nämlich aus einer flachen Metallplatine mit konstanter Blechdicke hergestellt. Im folgenden soll bzgl. des Verfahrens zur Herstellung des Karosserierahmenbauteiles 1 näheres erläutert werden, wobei - im Endeffekt - ein dreidimensionales Karosserierahmenbauteil 1 hergestellt wird, das - wie schematisch aus Fig. 1 ersichtlich ist - einen höher liegenden Bereich 4a und einen tiefer liegenden Bereich 4b aufweist:

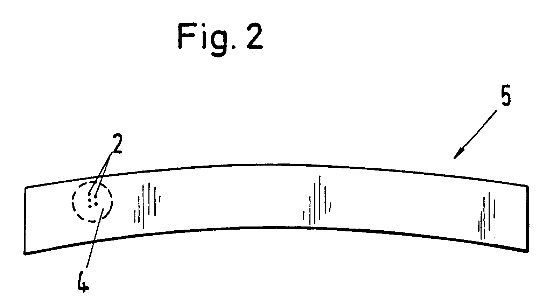

Fig. 2 zeigt eine Metallplatine 5, die mit Hilfe eines Umformvorganges so umgeformt werden kann, daß das in Fig. 2 gezeigte Karosserierahmenbauteil 1 mit der für die Dachträgerstütze notwendigen spezifischen Form entsteht. Hierbei sind nur einige Durchgangslöcher 2 in der linken Hälfte der Metallplatine- 5 angedeutet, wobei die hier kreisförmig ausgebildeten Durchgangslöcher 2 vzw. einen Lochdurchmesser von 3 mm und einen Lochabstand von 3 mm aufweisen.

Prinzipiell eignen sich für diese Technik innenliegende Bauteile mit örtlich unterschiedlichen Belastungen wie z.B. Profilhalbschalen, Verstärkungsbleche (Stegblech Schweller, Verstärkung Sicherheitsgurt, Querträger innen u.s.w.)

Grundsätzlich wird bei dem Verfahren zum Herstellen eines Karosserierahmenbauteiles 1 für die Karosserie eines Kraftfahrzeuges das Karosserierahmenbauteil 1 aus einem im wesentlichen flächigem Material gebildet, indem das flächige Material, zumeist eine Metallplatine 5, zu einer innerhalb einer Karosserie einbaubaren spezifischen Form umgeformt wird. Das Karosserierahmenbauteil 1 nimmt - im in der Karosserie eingebauten Zustand - die auf das Karosserierahmenbauteil 1 wirkenden Kräfte auf, wobei durch Aufnahme dieser Kräfte aufgrund der spezifischen Form des Karosserierahmenbauteiles 1 innerhalb verschiedener Bereiche des Karosserierahmenbauteils 1 unterschiedliche Belastungs- bzw. Spannungszustände erzeugt werden.

Die Gewichtseinsparung für das Karosserierahmenbauteil 1 und eine Zeitersparnis bei der Durchführung des Verfahrens wird dadurch realisiert, daß vor dem Umformen oder während des Umformens des flächigen Materials zu der spezifischen Form des Karosserierahmenbauteiles 1 in dem Bereich 4 des flächigen Materials, in dem nach dem Umformen - in eingebautem Zustand des Karosserierahmenbauteiles 1 - ein geringerer Belastungs- bzw. Spannungszustand auftritt, mehrere Durchgangslöcher 2 zur Reduzierung des Materials des Karosserierahmenbauteiles 2 ausgebildet werden. Einerseits können die Durchgangslöcher 2 unmittelbar vor dem Umformvorgang, beispielsweise in einer Pressenstraße beim Beschnitt einer Metallplatine 5 eingebracht werden, so daß außer dem Lochen mit einem Lochwerkzeug kein zusätzlicher Verfahrenschritt zur Ausbildung der Durchgangslöcher 2 mehr erforderlich ist. Andererseits könnten die Durchgangslöcher 2 aber auch während des Umformvorganges entsprechend eingebracht werden. Das Verfahren wird vzw. rechnergestützt realisiert.

Bei dem hier beschriebenen Verfahren wird der Umformvorgang durch Tiefziehen realisiert. Folglich können die Durchgangslöcher 2 vor dem Tiefziehen bei dem Beschnitt des flächigen Materials, hier der in Fig. 2 dargestellten Metallplatine 5 gebildet werden. Es ist aber auch denkbar, daß die Durchgangslöcher 2 während des Tiefziehens in dem flächigen Material ausgebildet werden. Hierfür könnten die für das Tiefziehen notwendigen Werkzeuge entsprechend ausgebildet sein.

Es ist von Vorteil, daß das aus einer Metallplatine 5 hergestellte Karosserierahmenbauteil 1 eine im wesentlichen konstante Dicke aufweist, da dies die weitere Behandlung und Verarbeitung - eben ohne Dickensprünge berücksichtigen zu müssen - wesentlich vereinfacht.

## Patentansprüche

1. Karosserierahmenbauteil (1) für die Karosserie eines Kraftfahrzeuges, wobei das Karosserierahmenbauteil (1) eine spezifische Form aufweist und zur Aufnahme mindestens einer auf das Karosserierahmenbauteil (1) wirkenden Kraft ausgebildet ist, wobei aufgrund der spezifischen Form des Karosserierahmenbauteiles (1) bei Aufnahme dieser Kraft innerhalb verschiedener Bereiche (3, 4) des Karosserierahmenbauteiles (1) unterschiedliche Belastungs- bzw. Spannungszustände existieren, insbesondere in einem ersten Bereich (3) hohe und in einem zweiten Bereich (4) geringere Belastungs- bzw. Spannungszustände auftreten und in dem Bereich (4) des geringeren Belastungs- bzw. Spannungszustandes zur Reduzierung des Materials des Karosserierahmenbauteiles (1) Durchgangslöcher (2) ausgebildet sind, **dadurch gekennzeichnet, daß** durch bestimmte Lochabstände zwischen den Durchgangslöchern (2) ein gleitender Übergang von einem Bereich eines höheren Belastungs- bzw. Spannungszustandes zu einem Bereich eines geringeren Belastungs- bzw. Spannungszustandes ausgebildet ist

2. Karosserierahmenbauteil nach dem vorhergehenden Anspruch, **dadurch gekennzeichnet, daß** durch die Durchgangslöcher (2) ein bestimmtes Lochmuster gebildet ist.

3. Karosserierahmenbauteil nach einem der vorhergehenden Ansprüche, **dadurch gekennzeichnet, daß** durch das Lochmuster das Gewicht des Karosserierahmenbauteiles (1) gemäß der innerhalb des Karosserierahmenbauteils (1) wirkenden Belastungen optimiert ist.

4. Karosserierahmenbauteil nach einem der vorhergehenden Ansprüche, **dadurch gekennzeichnet, daß** das Karosserierahmenbauteil (1) überall eine im wesentlichen gleiche Materialdicke aufweist.

5. Karosserierahmenbauteil nach einem der vorhergehenden Ansprüche, **dadurch gekennzeichnet, daß** die Durchgangslöcher (2) eine bestimmte Form aufweisen.

6. Karosserierahmenbauteil nach einem der vorhergehenden Ansprüche, **dadurch gekennzeichnet, daß** die Durchgangslöcher (2) kreisförmig, dreiecksförmig oder viereckig ausgebildet sind.

7. Karosserierahmenbauteil nach einem der vorhergehenden Ansprüche, **dadurch gekennzeichnet, daß** die Durchgangslöcher (2) einen bestimmten Lochdurchmesser aufweisen.

8. Karosserierahmenbauteil nach einem der vorhergehenden Ansprüche, **dadurch gekennzeichnet, daß** die Form und der Lochdurchmesser der Durchgangslöcher (2) an die in dem Karosserierahmenbauteil (1) auftretenden Belastungen angepaßt sind.

9. Karosserierahmenbauteil nach einem der vorhergehenden Ansprüche, **dadurch gekennzeichnet, daß** die Durchgangslöcher (2) in einem bestimmten Abstand zu einem Krafteinleitungspunkt des Karosserierahmenbauteiles (1), insbesondere in einem bestimmten Abstand zu Scharnieren, Federbeinen, Funktionsflächen oder Knoten vorgesehen sind.

10. Karosserierahmenbauteil nach einem der vorhergehenden Ansprüche, **dadurch gekennzeichnet, daß** das Karosserierahmenbauteil (1) als Dachträgerstütze ausgeführt ist.

11. Karosserierahmenbauteil nach dem vorhergehenden Anspruch, **dadurch gekennzeichnet, daß** die Durchgangslöcher (2) im mittleren Bereich der Dachträgerstütze ausgebildet sind.

12. Karosserierahmenbauteil nach einem der vorhergehenden Ansprüche, **dadurch gekennzeichnet, daß** das Lochmuster stufenförmig ausgebildet ist.

13. Karosserierahmenbauteil nach einem der vorhergehenden Ansprüche, **dadurch gekennzeichnet, daß** das Karosserierahmenbauteil (1) aus Metall hergestellt ist.

14. Verfahren zum Herstellen eines Karosserierahmenbauteiles (1), insbesondere eines Karosserierahmenbauteiles (1) nach einem der Ansprüche 1 bis 13, für die Karosserie eines Kraftfahrzeuges, wobei das Karosserierahmenbauteil (1) aus einem im wesentlichen flächigem Material durch Umformen zu einer innerhalb einer Karosserie einbaubaren spezifischen Form gebildet wird und das Karosserierahmenbauteil (1) - im in der Karosserie eingebauten Zustand - mindestens eine auf das Karosserierahmenbauteil (1) wirkende Kraft aufnimmt, wobei bei Aufnahme dieser Kraft aufgrund der spezifischen Form des Karosserierahmenbauteiles (1) innerhalb verschiedener Bereiche (3, 4) des Karosserierahmenbauteiles (1) unterschiedliche Belastungs- bzw. Spannungszustände erzeugt werden, **dadurch gekennzeichnet, daß** vor dem Umformen oder während des Umformens des flächigen Materials zu der spezifischen Form des Karosserierahmenbauteiles (1) in dem Bereich (4) des flächigen Materials, in dem nach dem Umformen - in eingebautem Zustand des Karosserierahmenbauteiles (1) - ein geringerer Belastungs- bzw. Spannungszustand auftritt, Durchgangslöcher (2) zur Reduzierung des Materials des Karosserierahmenbauteiles (1) ausgebildet werden, wobei durch die Wahl bestimmter Lochabstände zwischen den Durchgangslöchern (2) ein gleitender Übergang von einem Bereich eines höheren Belastungs- bzw. Spannungszustandes zu einem Bereich eines geringeren Belastungs- bzw. Spannungszustandes ausgebildet wird.

15. Verfahren zum Herstellen eines Karosserierahmenbauteiles nach Anspruch 14, **dadurch gekennzeichnet, daß** das Umformen durch Tiefziehen realisiert wird.

16. Verfahren zum Herstellen eines Karosserierahmenbauteiles nach Anspruch 14 oder 15, **dadurch gekennzeichnet, daß** die Durchgangslöcher (2) vor dem Umformen bei dem Beschnitt des flächigen Materials gebildet werden.

17. Verfahren zum Herstellen eines Karosserierahmenbauteiles nach Anspruch 15, **dadurch gekennzeichnet, daß** die Durchgangslöcher (2) während des Tiefziehens des flächigen Materials durch die für das Tiefziehen notwendigen Werkzeuge gebildet werden.

18. Verfahren zum Herstellen eines Karosserierahmenbauteiles nach einem der Ansprüche 14 bis 17, **dadurch gekennzeichnet, daß** das Karosserierahmenbauteil (1) aus Metall hergestellt wird.

## Claims

1. Body framework component (1) for the body of a motor vehicle, the body framework component (1) having a specific shape and being designed such that it absorbs at least one force acting on the body framework component (1), the specific shape of the body framework component (1) resulting in the existence of differing states of loads or stresses within different regions (3, 4) of the body framework component (1) when this force is being absorbed, there occurring, in particular, high states of loads or stresses in a first region (3) and lower states of loads or stresses in a second region (4), and through holes (2) being formed in the region (4) of the lower state of loads or stresses for the purpose of reducing the material of the body framework component (1), **characterized in that** defined hole spacings between the through holes (2) result in the formation of a sliding transition from a region of a relatively high state of loads or stresses to a region of a lower state of loads or stresses.

2. Body framework component according to the preceding claim, **characterized in that** a defined pattern of holes is formed by the through holes (2) .

3. Body framework component according to one of the preceding claims, **characterized in that** the pattern of holes leads to the weight of the body framework component (1) being optimized in accordance with the loads acting within the body framework component (1).

4. Body framework component according to one of the preceding claims, **characterized in that** the body framework component (1) has overall an essentially uniform material thickness.

5. Body framework component according to one of the preceding claims, **characterized in that** the through holes (2) have a defined shape.

6. Body framework component according to one of the preceding claims, **characterized in that** the through holes (2) are of circular, triangular or quadrilateral design.

7. Body framework component according to one of the preceding claims, **characterized in that** the through holes (2) have a defined hole diameter.

8. Body framework component according to one of the preceding claims, **characterized in that** the shape and the hole diameter of the through holes (2) are matched to the loads which occur in the body framework component (1).

9. Body framework component according to one of the preceding claims, **characterized in that** the through holes (2) are provided at a defined spacing with respect to a point at which force is introduced into the body framework component (1), in particular at a defined spacing with respect to hinges, spring legs, functional surfaces or gussets.

10. Body framework component according to one of the preceding claims, **characterized in that** the body framework component (1) is designed as a roof-rack support.

11. Body framework component according to the preceding claim, **characterized in that** the through holes (2) are formed in the central region of the roof-rack support.

12. Body framework component according to one of the preceding claims, **characterized in that** the pattern of holes is of step-like design.

13. Body framework component according to one of the preceding claims, **characterized in that** the body framework component (1) is produced from metal.

14. Method of producing a body framework component (1), in particular a body framework component (1) according to one of Claims 1 to 13, for the body of a motor vehicle, the body framework component (1) being formed from an essentially flat material by reshaping to give a specific shape which can be fitted within a body, and the body framework component (1) - when fitted in the body - absorbing at least one force acting on the body framework component (1), the specific shape of the body framework component (1) resulting in differing states of loads or stresses being produced within different regions (3, 4) of the body framework component (1) when this force is being absorbed, **characterized in that** before the flat material is reshaped, or whilst it is being reshaped, to give the specific shape of the body framework component (1), there are formed in the region (4) of the flat material, in which there occurs a relatively low state of loads or stresses after the reshaping - when the body framework component (1) is fitted - through holes (2) for the purpose of reducing the material of the body framework component (1), the selection of defined hole spacings between the through holes (2) resulting in the formation of a sliding transition from a region of a relatively high state of loads or stresses to a region of a lower state of loads or stresses.

15. Method of producing a body framework component according to Claim 14, **characterized in that** the reshaping is brought about by deep-drawing.

16. Method of producing a body framework component according to Claim 14 or 15, **characterized in that** the through holes (2) are formed before reshaping as the flat material is being cut.

17. Method of producing a body framework component according to Claim 15, **characterized in that** the through holes (2) are formed during the deep-drawing of the flat material by the tools necessary for the deep-drawing.

18. Method of producing a body framework component according to one of Claims 14 to 17, **characterized in that** the body framework component (1) is produced from metal.

## Revendications

1. Elément de fabrication de châssis de carrosserie (1) pour la carrosserie d'un véhicule automobile, où l'élément de fabrication de châssis de carrosserie (1) présente une forme spécifique et est développé pour la réception d'au moins une force agissant sur l'élément de fabrication de châssis de carrosserie (1), moyennant quoi en raison de la forme spécifique de l'élément de fabrication de châssis de carrosserie (1), lors de la réception de cette force en différentes zones (3, 4) de l'élément de fabrication de châssis de carrosserie (1), différents états de sollicitation et/ou contrainte existent, en particulier dans une première zone (3) des états d'importantes sollicitations et/ou contraintes, et dans une seconde zone (4), des états de moindres sollicitations et/ou contraintes, et moyennant quoi dans la zone (4) d'état de moindre sollicitation et/ou contrainte, des trous de passage (2) sont développés pour la diminution du matériau de l'élément de fabrication de châssis de carrosserie (1), **caractérisé en ce qu'**avec des écartements des trous bien définis entre les trous de passage (2), une transition glissante d'une zone à état de plus importante sollicitation et/ou contrainte vers une zone à état de moindre sollicitation et/ou contrainte, est réalisée.

2. Elément de fabrication de châssis de carrosserie selon la revendication précédente, **caractérisé en ce qu'**un motif à trous déterminé est formé par les trous de passage (2).

3. Elément de fabrication de châssis de carrosserie selon l'une quelconque des revendications précédentes, **caractérisé en ce qu'**avec le motif à trous, le poids de l'élément de fabrication de châssis de carrosserie (1) est optimisé en fonction des sollicitations agissant dans l'élément de fabrication de châssis de carrosserie (1).

4. Elément de fabrication de châssis de carrosserie selon l'une quelconque des revendications précédentes, **caractérisé en ce que** l'élément de fabrication de châssis de carrosserie (1) présente partout une épaisseur de matériau essentiellement identique.

5. Elément de fabrication de châssis de carrosserie selon l'une quelconque des revendications précédentes, **caractérisé en ce que** les trous de passage (2) présentent une forme bien définie.

6. Elément de fabrication de châssis de carrosserie selon l'une quelconque des revendications précédentes, **caractérisé en ce que** les trous de passage (2) sont développés avec une forme circulaire, triangulaire ou carrée.

7. Elément de fabrication de châssis de carrosserie selon l'une quelconque des revendications précédentes, **caractérisé en ce que** les trous de passage (2) présentent un diamètre de trou bien défini.

8. Elément de fabrication de châssis de carrosserie selon l'une quelconque des revendications précédentes, **caractérisé en ce que** la forme et le diamètre de trou des trous de passage (2) sont adaptés aux contraintes apparaissant dans l'élément de fabrication de châssis de carrosserie (1) .

9. Elément de fabrication de châssis de carrosserie selon l'une quelconque des revendications précédentes, **caractérisé en ce que** les trous de passage (2) sont prévus avec un écartement bien défini par rapport à un point d'introduction d'une force de l'élément de fabrication de châssis de carrosserie (1), en particulier avec un écartement bien défini par rapport à des charnières, jambes de force à ressort, surfaces fonctionnelles ou noeuds.

10. Elément de fabrication de châssis de carrosserie selon l'une quelconque des revendications précédentes, **caractérisé en ce que** l'élément de fabrication de châssis de carrosserie (1) est réalisé en tant que support de longeron de toit.

11. Elément de fabrication de châssis de carrosserie selon l'une quelconque des revendications précédentes, **caractérisé en ce que** les trous de passage (2) sont développés dans la zone du milieu du support de longeron de toit.

12. Elément de fabrication de châssis de carrosserie selon l'une quelconque des revendications précédentes, **caractérisé en ce que** le motif à trous est développé en forme de gradins.

13. Elément de fabrication de châssis de carrosserie selon l'une quelconque des revendications précédentes, **caractérisé en ce que** l'élément de fabrication de châssis de carrosserie (1) est fabriqué en métal.

14. Procédé pour la fabrication d'un élément de fabrication de châssis de carrosserie (1), en particulier d'un élément de fabrication de châssis de carrosserie (1) selon l'une quelconque des revendications 1 à 13, pour la carrosserie d'un véhicule automobile, où l'élément de fabrication de châssis de carrosserie (1) est formé à partir d'un matériau essentiellement mince par refaçonnage pour adopter une forme spécifique pouvant être encastrée à l'intérieur d'une carrosserie, et où l'élément de fabrication de châssis de carrosserie (1) - à l'état d'encastrement dans la carrosserie - réceptionne au moins une force agissant sur l'élément de fabrication de châssis de carrosserie (1), moyennant quoi lors de la réception de cette force, en raison de la forme spécifique de l'élément de fabrication de châssis de carrosserie (1), en différentes zones (3, 4) de l'élément de fabrication de châssis de carrosserie (1), différents états de sollicitation et/ou contrainte sont générés, **caractérisé en ce qu'**avant le refaçonnage ou pendant le refaçonnage du matériau mince pour adopter la forme spécifique de l'élément de fabrication de châssis de carrosserie (1) dans la zone (4) du matériau mince, dans laquelle apparaît, après le refaçonnage - à l'état d'encastrement de l'élément de fabrication de châssis de carrosserie (1) - un état de moindre sollicitation et/ou contrainte, des trous de passage (2) sont développés pour la réduction du matériau de l'élément de fabrication de châssis de carrosserie (1), moyennant quoi avec le choix d'écartements des trous bien définis entre les trous de passage (2), une transition glissante d'une zone avec un état de plus importante sollicitation et/ou contrainte vers une zone avec un état de moindre sollicitation et/ou contrainte, est développée.

15. Procédé pour la fabrication d'un élément de fabrication de châssis de carrosserie selon la revendication 14, **caractérisé en ce que** le refaçonnage est réalisé par emboutissage.

16. Procédé pour la fabrication d'un élément de fabrication de châssis de carrosserie selon l'une quelconque des revendications 14 ou 15, **caractérisé en ce que** les trous de passage (2) sont développés avant le refaçonnage lors du rognage du matériau mince.

17. Procédé pour la fabrication d'un élément de fabrication de châssis de carrosserie selon la revendication 15, **caractérisé en ce que** les trous de passage (2) sont formés pendant l'emboutissage du matériau mince avec les outils nécessaires pour l'emboutissage.

18. Procédé pour la fabrication d'un élément de fabrication de châssis de carrosserie selon l'une quelconque des revendications 14 à 17, **caractérisé en ce que** l'élément de fabrication de châssis de carrosserie (1) est fabriqué en métal.
